# EUROPEAN PATENT APPLICATION

(11) **EP 4 597 773 A1**
(43) Date of publication of application: **06.08.2025**
(21) Application number: 25154078.7
(22) Date of filing: 27.01.2025
(51) Int. Cl.: H02H 9/04

(54) **SURGE PROTECTION DEVICE, CORRESPONDING INSTALLATION AND METHOD**

(30) Priority: 02.02.2024 IT 202400002220
(71) Applicant: Inventronics GmbH, 85748 Garching b. München (DE)
(72) Inventor: LUCCATO, Daniele, I-31052 Varago di Maserada (Treviso) (IT); TOSCAN, Matteo, D-81539 Muenchen (DE); ZHAN, Ziliang, 511496 Panyu, Guangzhou (CN); FIGHERA, Diego, I-31040 Trevignano (Treviso) (IT)
(74) Representative: Buzzi, Notaro & Antonielli d'Oulx S.p.A.

(57) **Abstract**

A surge protection device (10, 12) for use in providing electrical power supply to electrical installations such as outdoor lighting installations affected by possible overvoltage phenomena due to lightning comprises:
surge protection circuitry (103, 104) configured to provide a surge discharge path between lines (L, N) in an electrical power supply,
a fault detection network (101, 102) coupled to the surge protection circuitry (103, 104) and configured to produce a detection signal that switches between a first value and a second value in response to a fault in the surge protection network (103, 104), and
a driver (12) coupled (D41/LSI) to the fault detection network (101, 102) to receive therefrom the detection signal, the driver (12) configured (200, 201, 204) to issue a warning signal in response to the detection signal switching between the first value and the second value.

## Description

### Technical field

The description relates to surge protection devices.

Solutions as disclosed herein can be used, for instance, in outdoor lighting installations (using LEDs as light generators sources, for instance) that are affected by possible overvoltage phenomena.

### Description of the related art

Outdoor lighting installations are exposed to overvoltage phenomena resulting from wires in the installation being struck by lightning.

Different solutions can be resorted to in order to protect driver circuitry of the light sources in a lighting installation.

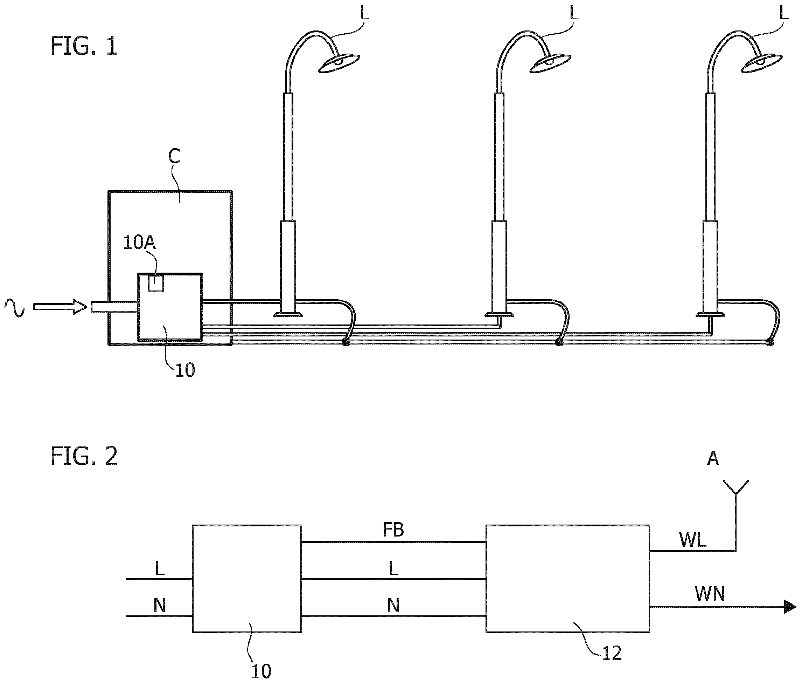

An outdoor lighting installation - a street lighting installation, for instance - as illustrated in Figure 1 may comprise one or more (pole-mounted, for instance) lighting sources L (using LEDs as light generators, for instance) supplied with electrical power from a supply cabinet C in turn fed with electrical power from a mains distribution grid.

For instance, considering the case of an L-to-N mode surge, a protection widely used in such installations includes a surge protection device, SPD 10 housed in the cabinet C and comprising a varistor such as a metal oxide varistor, MOV, for instance.

This is a component that exhibits a non-linear behavior and is configured to behave essentially like a Zener diode for voltages higher than its rated voltages.

For instance, for voltages higher than 230V RMS or 320V peak a MOV starts clamping any (high) overvoltage (usually up to 10KV) from the mains distribution grid.

A problem related to such a solution lies in that each surge (or "shot") may have associated therewith a significant amount of energy: therefore, the protection circuit may fail and shortcut even after a limited number of overvoltage phenomena.

A shortcut for the mains can be countered via a fuse, which however may ultimately blew up, so that after some time the driver circuitry will no longer be protected.

Different solutions have been proposed to provide information (in general terms, "feedback") about the status of the protection circuit. These may include an indicator 10A associated with the surge protection device, SPD 10.

In installation including a limited number of luminaires L, the protection can be in the cabinet C of the installation (as illustrated in Figure 1) so that the indicator 10A will be easy to check.

For installations in long streets with many luminaries (mounted on poles, for instance) the SPD is connected close to the driver directly in the head of the poles to be more effective.

This means that having an indicator is not useful because this would be hardly visible by an operator.

In the case a system is not equipped with an indicator, a fuse connected in series to the driver may cause the driver to shut down when the SPD is damaged, which means that the lighting sources will be shut down (namely turned off) as well.

Documents US 2023/223749 A1, US 10 004 123 B1, and US 2022/159808 A1 are exemplary of the prior art.

### Object and summary

An object of one or more embodiments is to contribute in addressing the various issues discussed in the foregoing.

According to one or more embodiments, such an object can be achieved by a surge protection device (SPD) having the features set forth in the claims that follow.

One or more embodiments relate to a corresponding installation. A street lighting installation comprising one or more (pole-mounted, for instance) lighting sources (using LEDs as light generators, for instance) may be exemplary of such an installation.

One or more embodiments relate to a corresponding method.

The claims are an integral part of the technical teaching provided herein in respect of the embodiments.

Solutions as described herein facilitate building a "smart" SPD, wherein a driver is provided with information about the possible failure of the SPD.

In response to becoming aware of the SPD failure, the driver can provide desired information (referred herein also as "external" feedback) via a wireless/wired network and/or by changing the intensity of the light emitted by the luminaires, with the capability of storing the related information or via other feedback channels.

Solutions as described herein offer one or more of the following advantages:
continuity of protection against surges, with feedback provided in case of damages;
reduced cost, due to the possibility of using an interface already present in the system in order to detect failure and send corresponding feedback;
reliability, due to direct connection with the SPD.

### Brief description of the drawings

One or more embodiments will now be described, by way of example only, with reference to the annexed figures, wherein:
Figure 1 has already been discussed in the foregoing in presenting the related art and drawbacks experienced thereby;
Figure 2 is a block diagram illustrative of principles underlying solutions described herein;
Figures 3 and 4 are circuit diagrams of parts of solutions described herein; and
Figure 5 is a general circuit diagram exemplary of solutions described herein.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment" that may be present in one or more points of the present description do not necessarily refer to one and the same embodiment. Moreover, particular configurations, structures, or characteristics may be combined in any adequate way in one or more embodiments.

The headings/references used herein are provided merely for convenience and hence do not define the extent of protection or the scope of the embodiments.

Throughout the figures annexed herein, unless the context indicates otherwise, like parts or elements are indicated with like references/numerals and a corresponding description will not be repeated for the sake of brevity.

Also, for the sake of simplicity and ease of explanation, a same designation may be applied throughout this description to designate:
a node or line as well as a signal occurring at that node or line (this may be the case of the signal/line FB referred to in the following), and/or
a component (such as a capacitor or resistor) as well as electrical parameter thereof.

When it is mentioned herein that an element is "connected to" or "coupled to" another element, it should be understood that still another element may be interposed therebetween, as well as that the element may be connected or coupled directly to another element.

On the contrary, when possibly mentioned that an element is "connected directly to" or "coupled directly to" another element, it should be understood that still another element is not interposed therebetween.

Figure 2 is a block diagram illustrative of principles underlying solutions described herein.

In Figure 2, reference 10 denotes a surge protection device, SPD configured to be coupled (and thus to be active) between a "line" terminal L and a "neutral" (ground) terminal N.

Such lines/terminals can be present, for instance, in an installation as already discussed in connection with Figure 1, namely a street lighting comprising one or more (pole-mounted, for instance) lighting sources or luminaires L (using LEDs as light generators, for instance) supplied with electrical power from a supply cabinet C in turn fed with electrical power from a mains distribution grid.

Here again, the case of a so-called differential line-to neutral (L-to-N) surge protection device, SPD 10 housed in the cabinet C is considered by way of example.

In solutions described herein, the SPD 10 is made a "smart" type of SPD (SPDS) with the ability of providing (external) feedback information on the status of the SPD 10.

As illustrated herein, this information can be provided (for instance as a signal SPDfb as discussed in the following) over a connection or channel FB towards a driver unit 12, that is configured to receive from the SPD 10:
power supplied over the lines L and N, as otherwise conventional in the art, and
the feedback information FB from the SPD 10.

In solutions as described herein, the driver 12 - and, more generally, the SPDS assembly (the SPD 10 plus the driver 12) - is configured to be able to provide "external" feedback, even in the absence of an indicator such as the indicator 10A in Figure 1.

As exemplified herein, such "external" feedback can be provided over a channel comprising a wired connection WN (a wired network, for instance) and/or over a wireless link WL (via an antenna A, for instance).

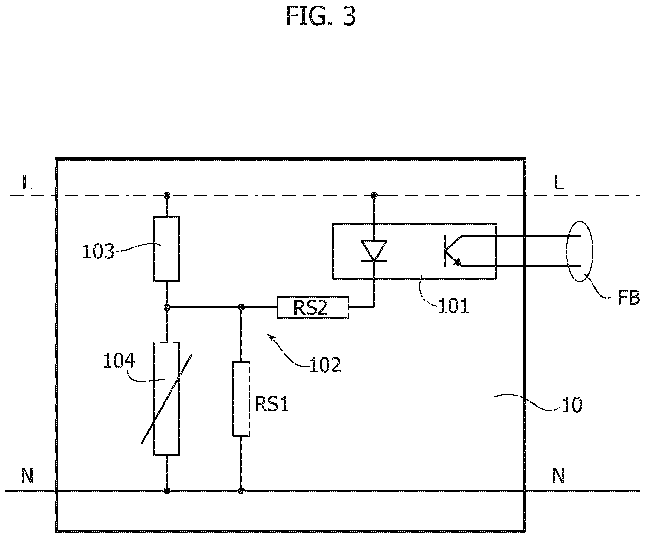

Figure 3 is an exemplary circuit diagram of a "smart" SPD 10 configured to provide feedback in the form of an (advantageously) isolated signal FB.

In the circuit illustrated in Figure 3, the lines L and N have coupled therebetween the series connection of the transmitter side (a light emitting diode, for instance) of an optocoupler 101 and a resistive network 102 comprising the cascade of two resistors RS1, RS2.

In the exemplary circuit of Figure 3, the series connection of a fuse 103 and a varistor 104 is likewise arranged between the lines L and N.

A varistor is a voltage dependent resistor. The resistance of a varistor is variable and depends on the voltage applied. The resistance decreases when the voltage increases.

The varistor 104 may be of any type known to those of skill in the art. Advantageously, the varistor 104 may be a metal oxide varistor (MOV).

Such a varistor 104 (hereinafter a MOV will be referred to throughout for simplicity as exemplary of a varistor) can provide surge protection proper while the fuse 103 provides supplementary protection in the case the MOV 104 is damaged (end of life).

The intermediate node between the fuse 103 and the MOV 104 is connected with the intermediate node between the resistors RS1 and RS2 in the resistive network (essentially a voltage divider) 102.

The MOV 104 is the active part that provides protection for the driver 12. The fuse 103 is operative to disconnect the MOV 104 from the circuit when the MOV 104 fails, which may occur after a certain number of shots (overload events).

In fact, the fuse 103 and/or the varistor 104 in the surge protection network may become damaged, even after a limited number of overvoltage phenomena, in different ways:
the fuse 103 "burning" or blowing up, thus becoming an open circuit;
the varistor 104 becoming short-circuited (which almost invariably results in immediate burning or blewing up of the fuse 103); and/or
the varistor 104 being set to a very high impedance, practically becoming an open circuit (which may end up by leading to burning or blewing up of the fuse 103).

The resistors RS1 and RS2 (collectively designated as 102) plus the optocoupler 101 provide the "intelligence" of the smart SPD 10.

In an exemplary circuit as illustrated in Figure 3, the optocoupler 101 can be switched on (activated) in response to the fuse 103 is opened (burnt, thus made non-conductive), which results in an (electrically insulated) feedback signal FB becoming available at the output side (a phototransistor, for instance) of the optocoupler 101.

When the fuse 103 blews up, the transmitted side (LED) in the optocoupler 101 is activated with a current which may depend on whether the MOV 104 blews up as well or the MOV 104 gets shortcut.

In fact, onset of damage in the MOV 104 may be difficult to predict, so that:
in the case of a MOV shortcut, then only the resistor RS2 in the resistive network 102 will limit the current through the optocoupler 101;
in the case the MOV 104 is open (with a high-impedance, essentially non-conductive), the optocoupler 101 will be powered through RS1 and RS2.

The resistors RS1 and RS2 can be dimensioned so that the output transistor of the optocoupler 101 will close (become conductive) with an ensuing change in the level of the feedback signal FB to indicate the onset of a fault condition.

In a device as exemplified herein a surge discharge path between the lines L and N is provided via surge protection circuitry that comprises at least one of a fuse 103 and a varistor 104 having a terminal coupled to a fault detection network comprised of the elements 101 and 102.

To summarize, in a device as described herein, the surge discharge path in the surge protection circuitry comprises the series connection of a fuse 103 and a varistor 104 that have a common terminal coupled to the fault detection network 101, 102.

In a device as described herein, such a fault detection network 101, 102 comprises:
a first resistor RS1 in parallel to the varistor 104, so that the first resistor RS1 is coupled to the terminal that is common to the fuse 103 (arranged between the line L and the varistor 104) and to the varistor 104 (arranged between the fuse 103 and the line N);
a second resistor RS2 having a first end coupled to the common terminal of the fuse 103 and the varistor 104 and a second end coupled to an input of a signal transfer element (optionally an optocoupler) 101, so that such signal transfer element has an output (the output transistor, for instance) configured to provide a detection signal FB/SPDfb that switches between a first value and a second value in response to a fault in the surge protection network 103, 104.

The optocoupler 101 facilitates achieving an isolation that can be basic or double.

The driver 12 associated with a "smart" SPD as described herein is configured to sense the feedback signal FB and to process it in order to understand if the output (transistor) of the optocoupler 101 is open or shorted.

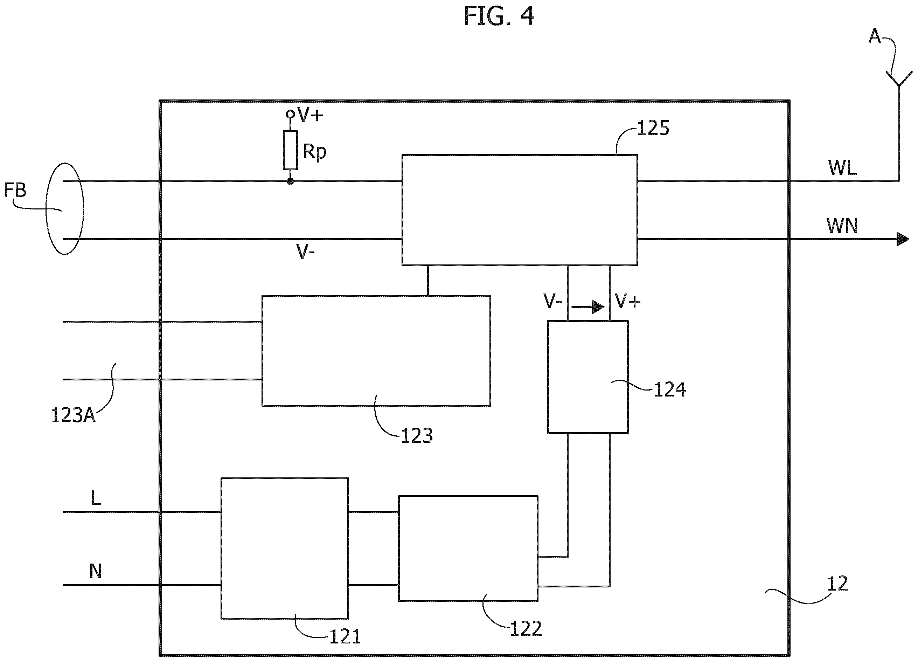

The exemplary driver 12 as illustrated in Figure 4 includes:
a port to receive the feedback signal FB (in the form of data SPDfb, for instance);
a L/N input line or port towards a bridge rectifier 121;
a power factor controller, PFC 122 coupled to the output of the bridge rectifier 121;
a DC/DC converter 123 configured (in a manner known per se to those of skill in the art) to supply over a connection line 123A a DC voltage to the lighting sources (luminaires L in Figure 1) under the control of the PFC 122;
an auxiliary power supply 124 likewise controlled by the PFC 122; and
an interface 125, supplied with voltages V- and V+ from by the power supply 124; the interface 125 is configured to collect data, essentially the feedback signal FB (referred to a voltage V-, for instance) provided by the circuit 10 and the supply voltage provided by the converter 123.

The interface 125 is configured to issue signals corresponding to/derived from the data collected and to communicate them as "external" feedback provided over a wired connection WN (a wired network, for instance) and/or over a wireless link WL (via an antenna A, for instance).

In Figure 4, the reference Rp denotes a pull-up resistor through which a voltage V+ can be applied to one of the conductors of the line carrying the feedback signal FB, the other conductor being at a voltage V-.

A solution as described herein lends itself to being implemented as a generic driver.

However, an advantageous implementation of the driver 12 exemplified herein may be based on a "D4i" ("Device For The Iot") configuration that facilitates interoperability between devices within a lighting system.

As exemplified herein, a signal SPDfb is read on the input port for the feedback signal FB.

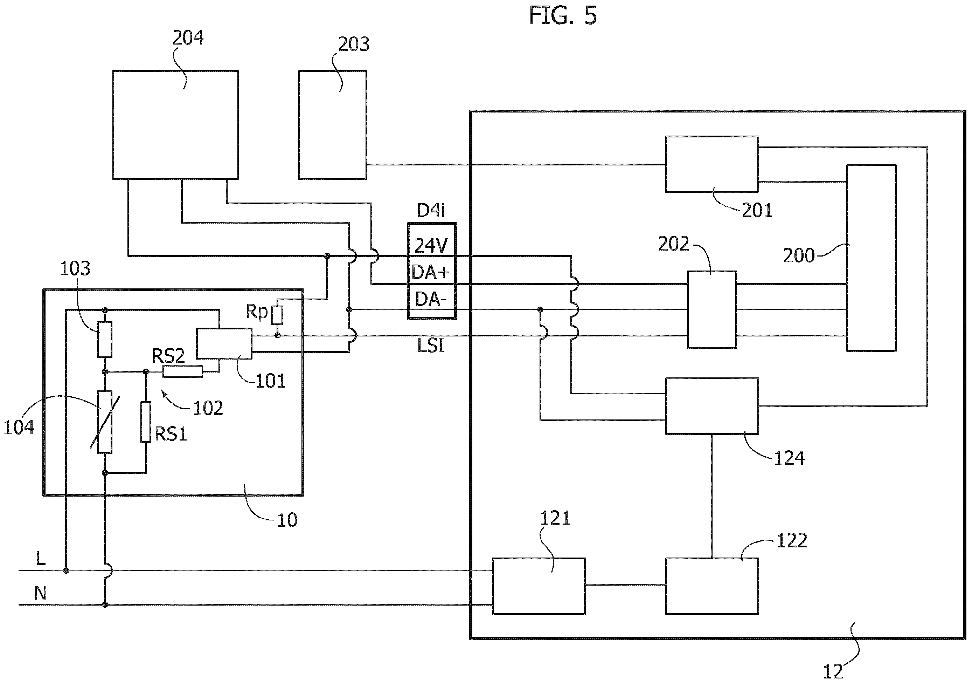

Advantageously, this is an input port to the driver 12 with a pull-up resistor Rp whose connection to the output of the optocoupler 100 of the SPD is represented explicitly in Figure 5 with reference to the (advantageous, yet non mandatory) use of a "D4i type" driver.

The circuit diagram of Figure 5 further details a possible advantageous implementation of a "smart" SPD as discussed herein.

In Figure 5, various parts or elements (such as the bridge rectifier 121, the power factor control circuitry 122 or the auxiliary power supply 124 already introduced in connection with the previous figures) are indicated with the same reference symbols/numbers: for brevity a corresponding description of these elements will not be repeated in connection with Figure 5.

Also, certain parts or elements introduced in connection with the previous figures can be assumed to be incorporated to corresponding blocks in Figure 5 so that certain aspects of embodiments will not be obscured: for instance, the converter 123 of Figure 4 can be assumed to be included in the power supply unit 201 of Figure 5 and the interface 125 of Figure 4 can be assumed to be included in the controller 200 of Figure 5.

When the output of the "smart" SPD 10 is connected as illustrated in Figure 5, the resistor Rp sinks current into the output (transistor) of the optocoupler 101 in case the MOV 104 is damaged.

An associated D4i port is advantageously supplied via the auxiliary power supply 124 (voltages V+ and V-equal to 24V and DA-) so that these can be advantageously isolated with respect to mains supply (left-hand side of Figure 1), even though this does not amount to a mandatory feature.

The circuit diagram of Figure 5 illustrates a controller 200 that cooperates with a power supply unit, PSU 201.

Advantageously, with the controller 200 there is associated an isolation block 202 that facilitates collection of signals that are used by the controller 200 to cooperate with the power supply unit 201 in supplying power to lighting sources (LEDs, for instance) collectively indicated as 203.

The isolation block 202 conveys towards the controller 200 (for instance in a differential manner, via the DA- pin of the D4i port plus a pin/line LSI added thereto) the feedback signal SPDfb from the surge protection device, SPD 10: this is essentially the feedback signal/information previously referred to also as FB.

Thus, the device 10, 12 as disclosed herein comprises at least one electrical isolator in the path of the detection signal FB; SPDfb through the fault detection network 101, 102 and the driver 12, namely:
the optocoupler 101 in the fault detection network, which is configured to apply the detection signal FB; SPDfb to the D4i/LSI port; and/or
the isolator block 202 in the driver 12, which is configured to receive the detection signal FB; SPDfb from the coupling port D4i/LSI.

The controller 200 is configured to recognize if the signal SPDfb is high or low and transmit a corresponding signal over output lines such as WN (wired network) and/or WL (wireless network). To this latter effect, a wireless module 204 can be coupled to the D4i/LSI port.

Advantageously, in a device 10, 12 as described herein, the driver 12 can be configured to issue a warning signal ("external feedback") as:
an electrical warning signal over a wired link WN; and/or
a RF warning signal over a wireless link WL, A.

Advantageously, the controller 200 can be configured (in a manner known per se to those of skill in the art) to modify the DC/DC behavior of the PSU 201 and effect some changes in the parameters that control the LED load as represented by the block 203.

That is, in the device 10, 12 presented herein the driver 12 is configured to drive (via the PSU 201) an electrical load 203 based on a set of drive parameters and to modify that set of drive parameters in response to the detection signal SPDfb from the optoisolator 101 switching between a first value and a second value.

As noted, while this does not represent a mandatory option, a "smart" SPD as discussed herein benefits from the driver 12 being based on an otherwise conventional D4i driver configuration modified as discussed herein.

Drivers referred to as D4i drivers are "intelligent" drivers suited to collect data and transmit them to a central data management. These drivers can possibly exploit the associated data interface also to reveal when the protection is no longer available (expired) or damaged: this facilitates properly scheduling (synchronizing) service to possibly replace damaged components.

To summarize, to that effect, the driver 12 exemplified in Figure 5 may advantageously comprise:
the bridge rectifier 121;
the power factor correction, PFC circuitry 122;
the auxiliary (isolated) power supply circuitry 124 configured to provide dedicated low-voltage supply to the power factor correction, PFC circuitry 122 and to the power supply unit 201 for the LED sources 203;
the isolation block 202 to isolate the D4i/LSI port with respect to the control unit 200;
the D4i/LSI input/output port, namely a D4i port that, in solutions as described herein, is supplemented with a LSI pin.

As discussed, the LSI pin is configured to detect, based on feedback FB (signal SPDfb) provided at the output from the optocoupler 101, a fault/damaged condition affecting the MOV 104, the fuse protection 103 for the MOV 104, the supply of the optocoupler 101 when the MOV 104 is damaged or the optocoupler 101.

To summarize, a "smart" SPD 10, 12 as disclosed herein comprises surge protection circuitry 103, 104 configured to provide a surge discharge path between lines L, N in an electrical power supply, as well as a fault detection network 101, 102 coupled to the surge protection circuitry 103, 104 and configured to produce a detection signal FB; SPDfb that switches between a first value and a second value in response to a fault in the surge protection network 103, 104. A driver 12 coupled (via the D4i/LSi port) to the fault detection network 101, 102 receives therefrom the detection signal FB; SPDfb, and issues a warning signal in response to the detection signal FB; SPDfb switching between a first value and a second value.

In a device 10, 12 as illustrated herein, the fault detection network 101, 102 comprises a signal transfer element (the optocoupler 101) having an output (an output transistor, for instance) coupled to a pull-up resistor Rp, which facilitates the signal transfer element 101 in causing the detection signal FB; SPDfb to switch between a first (logic) value and a second (logic) value in response to a fault in the surge protection network 103, 104.

It is noted that the pull-up resistor Rp is represented as included in the driver 12 in Figure 4 and as included in the SPD 10 in Figure 5.

This is intended to highlight that the pull-up resistor Rp is not required to be necessarily included in the driver 12.

The designation D4i/LSI is likewise intended to highlight that this port can advantageously be in compliance with the D4i standard, with a 24 V pin and an addition LSI input configured to be connected to the smart SPD 10.

Providing the pull-up resistor Rp in the smart SPD 10 facilitates making that component ready to be connected directly to a 24V voltage.

Also, the controller 200 can read the LSI signal that passes through the isolation block 202, being also able to deliver the "external feedback" data for wireless communication over a module 204 configured as a communication module compliant with the Digital Addressable Lighting Interface (DALI) dedicated protocol for digital lighting control.

I will be appreciated that, while a differential L-N surge mode has been discussed herein by way of example, solutions as presented herein can be applied also to other surge modes such as a common L/N-to-earth surge mode.

Solutions as presented herein can thus facilitate adoption of (MOV-based, for instance) SPD arrangements (both for common-mode and differential mode surge protection) wherein a feedback signal is provided in case of damage of the protection circuitry, advantageously as an (isolated) feedback signal as provided via an opto-isolator, for instance.

Without prejudice to the underlying principles, the details and embodiments may vary, even significantly, with respect to what has been described by way of example only, without departing from the extent of protection.

The extent of protection is determined by the annexed claims.

**LIST OF REFERENCES**

| | |
|---|---|
| Lighting sources (luminaires) | L |
| Cabinet | C |
| Surge protection device (SPD) | 10 |
| SPD indicator | 10A |
| Driver | 12 |
| Lines | L, N |
| Feedback | FB |
| Wired network | WN |
| Wireless network | WL |
| Antenna | A |
| Optocoupler | 101 |
| Resistive network RS1, RS2 | 102 |
| Fuse | 103 |
| Metal Oxide Varistor (MOV) | 104 |
| Pull-up resistor | Rp |
| Bridge rectifier | 121 |
| Power Factor Control (PFC) | 122 |
| DC/DC converter | 123 |
| LED supply | 123A |
| Auxiliary power supply unit | 124 |
| Interface | 125 |
| Input/output port | D4i/LSI |
| Controller | 200 |
| LED power supply unit (PSU) | 201 |
| Isolator block | 202 |
| LED lighting sources | 203 |
| Wireless module | 204 |

## Claims

1. A device (10, 12), comprising:
surge protection circuitry (103, 104) configured to provide a surge discharge path between lines (L, N) in an electrical power supply,
a fault detection network (101, 102) coupled to the surge protection circuitry (103, 104) and configured to produce a detection signal (FB) that switches between a first value and a second value in response to a fault in the surge protection network (103, 104), and
a driver (12) coupled (D4i/LSI) to the fault detection network (101, 102) to receive therefrom the detection signal (FB), the driver (12) configured (125, WN, WL, A; 200, 201, 204) to issue a warning signal in response to the detection signal (FB) switching between the first value and the second value.

2. The device (10, 12) of claim 1, wherein the driver (12) is configured to issue said warning signal as:
an electrical warning signal over a wired link (WN) ; and/or
a RF warning signal over a wireless link (WL, A).

3. The device (10, 12) of claim 1 or claim 2, wherein the driver (12) is configured to drive (201) an electrical load (203) based on a set of drive parameters and to modify the set of drive parameters in response to the detection signal (FB) switching between the first value and the second value.

4. The device (10, 12) of any of claims 1 to 3, comprising at least one electrical isolator (101, 202) in the path of the detection signal (FB) through the fault detection network (101, 102) and the driver (12).

5. The device (10, 12) of claim 4, comprising a coupling port (D4i/LSI) of the fault detection network (101, 102) to the driver (12), wherein the at least one electrical isolator (101, 202) comprises:
an optocoupler (101) in the fault detection network (101, 102) configured to apply the detection signal (FB; SPDfb) to said coupling port (D41/LSI); and/or
an isolator block (202) in the driver (12) configured to receive the detection signal (FB) from said coupling port (D4i/LSI).

6. The device (10, 12) of any of the previous claims, wherein the fault detection network (101, 102) comprises a signal transfer element (101) having an output coupled to a pull-up resistor (Rp), wherein the signal transfer element (101) is configured to provide said detection signal (FB) that switches between a first value and a second value in response to a fault in the surge protection network (103, 104).

7. The device (10, 12) of any of the previous claims, wherein the surge discharge path in the surge protection circuitry comprises at least one of a fuse (103) and a varistor (104) having a terminal coupled to the fault detection network (101, 102).

8. The device (10, 12) of claim 7, wherein the surge discharge path in the surge protection circuitry comprises the series connection of a fuse (103) and a varistor (104) having a common terminal coupled to the fault detection network (101, 102).

9. The device (10, 12) of claim 8, wherein the fault detection network (101, 102) comprises:
a first resistor (RS1) in parallel to the varistor (104) wherein the first resistor (RS1) is coupled to said common terminal of the fuse (103) and the varistor (104) ;
a second resistor (RS2) having a first end coupled to said common terminal of the fuse (103) and the varistor (104) and a second end coupled to an input of a signal transfer element (101), preferably an optocoupler, wherein the signal transfer element (101) has an output configured to provide said detection signal (FB) that switches between a first value and a second value in response to a fault in the surge protection network (103, 104).

10. An installation, comprising:
an electrical load, preferably a set of lighting sources (L), supplied via lines (L, N) in an electrical power supply, and
the device (10, 12) according to any of claims 1 to 9 arranged with said protection circuitry (103, 104) coupled to said lines (L, N) in the electrical power supply and configured to provide a surge discharge path between said lines (L, N) in the electrical power supply.

11. A method of operating an installation comprising an electrical load, preferably a set of lighting sources (L) supplied via lines (L, N) in an electrical power supply,
wherein the method comprises:
equipping the installation with a device (10, 12) according to any of claims 1 to 9 arranged with said protection circuitry (103, 104) coupled to said lines (L, N) in the electrical power supply and configured to provide a surge discharge path between said lines (L, N) in the electrical power supply.
